# EUROPÄISCHE PATENTSCHRIFT

(11) **EP 0 788 731 B1**
(45) Veröffentlichungstag und Bekanntmachung des Hinweises auf die Patenterteilung: **28.02.2001**
(21) Anmeldenummer: 97100664.8
(22) Anmeldetag: 17.01.1997
(51) Int. Cl.: A01D 90/12

(54) **Ladewagen mit einem Kratzboden, der wahlweise mit zwei unterschiedlichen Drehzahlen antreibbar ist**
Loading wagon with floor conveyor wich can be driven at two different rotation speeds
Remorque chargeuse comportant un fond mouvant qui peut être entrainé à deux rotations différentes

(30) Priorität: 09.02.1996 DE 19604674
(43) Veröffentlichungstag der Anmeldung: 13.08.1997
(73) Patentinhaber: CLAAS SAULGAU GMBH, D-88340 Saulgau (DE)
(72) Erfinder: Geng, Manfred, 88348 Saulgau-Bogenweiler (DE)

(56) Entgegenhaltungen:
- EP-A- 0 524 454
- WO-A-91/03150
- DE-A- 2 433 352
- DE-A- 4 005 429
- DE-A- 4 122 024
- US-A- 4 241 879

## Beschreibung

Die Erfindung betrifft einen Ladewagen mit einem Hydromotor und einem Kratzboden, der von dem Hydromotor mit wahlweise zwei unterschiedlichen Drehzahlen antreibbar ist, wobei ein Steuerventil mit zwei Stellungen vorgesehen ist, das die Schluckmenge des Hydromotors und dessen die Drehzahl bestimmt.

Ladewagen, wie beispielsweise in der deutschen Patentanmeldung P 41 30 720.8 beschrieben, sind sehr verbreitete landwirtschaftliche Maschinen. Der Laderaum weist einen sogenannten Kratzboden auf. Ein Kratzboden ist eine Anordnung mit über Kettenräder geführten endlosen Ketten, mit deren Hilfe Querlatten von vorne nach hinten über den Boden gezogen werden. Diese Querlatten, die mit Kratzern versehen sein können, befördern die Ladung beim Entladevorgang zur hinteren Öffnung des Laderaums.

Es ist bekannt, die endlosen Ketten mittels eines Hydromotors anzutreiben, der zwischen zwei verschiedenen Schluckmengen von Hand umgeschaltet werden kann. Die kleinere Schluckmenge entspricht einem kleineren Antriebsdrehmoment und einer höheren Drehzahl. Der Vorteil der Verwendung zweier Kratzbodengeschwindigkeiten liegt darin, daß am Anfang des Entladevorgangs, wenn der Kratzboden in Bewegung gesetzt wird und die gesamte Ladung bewegt werden muß, ein hohes Antriebsdrehmoment unumgänglich ist, während später, wenn schon ein Teil der Ladung ausgeworfen ist, zugunsten der höheren Drehzahl mit einem geringeren Antriebsdrehmoment gearbeitet und der Entladevorgang dadurch schneller zu Ende gebracht werden kann.

Der Erfindung liegt die Aufgabe zugrunde, die Bedienung des Kratzbodens beim Entladen zu vereinfachen.

Zur Lösung dieser Aufgabe werden die im Anspruch 1 gekennzeichneten Maßnahmen vorgeschlagen. Damit wird erreicht, daß die Umschaltung von der anfänglich niedrigen Antriebsdrehzahl auf die spätere höhere Antriebsdrehzahl selbsttätig erfolgt in Abhängigkeit von dem auf den Hydromotor wirkenden Belastungsmoment. Grundsätzlich wäre es möglich, dieses mittels eines Drehmomentsensors an der Antriebswelle des Kratzbodens zu erfassen. Das Belastungsmoment ist aber auch erfaßbar durch den in der hydraulischen Zuleitung oder Rückleitung des Hydromotors auftretenden Druck. Davon macht die Erfindung vorzugsweise Gebrauch. Der Druck sinkt beim Entladevorgang mit dem Belastungsmoment ab.

Zur Betätigung des Steuerventils in Abhängigkeit von dem Druck in einer der genannten Leitungen können bekannte hydraulische oder elektrohydraulische Komponenten herangezogen werden. Zum Beispiel kann der Druck unmittelbar an einem Betätigungskolben des maßgebenden Steuerventils zur Wirkung gebracht werden. Vorzugsweise kommt aber ein elektromagnetisch betätigbares Steuerventil oder Vorsteuerventil zum Einsatz. Im Zusammenhang damit wird ein auf den Druck in der Zu- oder Rückleitung des Hydromotors ansprechender elektrischer Druckschalter vorgesehen, der beim Absinken des Drucks auf einen bestimmten Ansprechwert umschaltet und dadurch die elektromagnetische Betätigung des Steuerventils bewirkt, derart, daß die Drehzahl des Hydromotors auf die höhere Drehzahlstufe ansteigt.

Zu beachten ist, daß der abgefühlte Druck trotz einer grundsätzlich abnehmenden Tendenz beim Entladevorgang gewissen Schwankungen unterliegen kann. Um zu vermeiden, daß es aus diesem Grund zu einem Flattern des Steuerventils und ruckartigen Bewegungen des Kratzbodens kommt, müssen Vorkehrungen getroffen werden, die darauf hinauslaufen, schon beim ersten Erreichen des Ansprechdrucks des Druckschalters den Umschaltvorgang auszulösen und die erreichte Schaltstellung sodann bis zum Ende des Entladevorgangs beizubehalten. Dazu ist der elektrische Druckschalter vorzugsweise mit Selbsthaltung ausgestattet, so daß der Hydromotor auf der höheren Drehzahlstufe verharrt, bis er abgeschaltet wird.

Ein Ausführungsbeispiel der Erfindung wird nachfolgend anhand der Zeichnung erläutert.

Im einzelnen zeigt
- Fig. 1: die Seitenansicht eines z. B. mit Heu vollbeladenen Ladewagens,
- Fig. 2: dieselbe Ansicht in einem späteren Stadium des Entladevorgangs und
- Fig. 3: ein hydraulisches Schaltbild einer Steueranordnung für den Hydromotor des Kratzbodens eines Ladewagens.

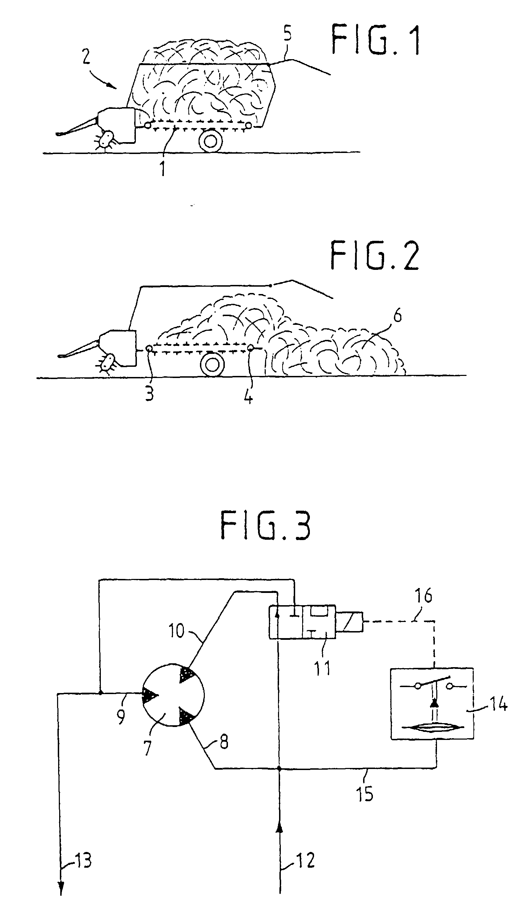

In den Figuren 1 und 2 ist der Kratzboden 1 des Ladewagens 2 schematisch mit seinen beiden Umlenkwellen 3 und 4 angedeutet. In Fig. 1 ist der Ladewagen vollbeladen. Trotz geöffneter Heckklappe 5 haben es die Kratzleisten schwer, unter der Ladung durchzureißen bzw. diese zur Hecköffnung hin mitzubewegen. Außerdem ist die Anlaufreibung zu überwinden. Dementsprechend ist das Belastungsmoment des in diesen Figuren nicht gezeigten Hydromotors groß. Hat aber dann gemäß Fig. 2 ein Teil 6 der Ladung den Laderaum verlassen, wobei sich der Ladewagen weiterbewegte, dann nimmt die Gewichtsbelastung und die Sperrkraft der Ladung auf den Kratzboden 1 stark ab. In diesem Zustand ist es wünschenswert und möglich, den Kratzboden - wenn auch mit geringerem Drehmoment - schneller anzutreiben.

Fig. 3 zeigt beispielhaft, wie dies selbsttätig geschehen kann. Der Hydromotor 7 hat zwei Hauptanschlüsse 8 und 9, die mit einer von einer nicht gezeigten Hydraulikpumpe kommenden Zuleitung 12 bzw. mit einer Rückleitung 13 verbunden sind. Ein Steueranschluß 10 des Hydromotors 7 steht mit einem Steuerventil 11 in Verbindung. In dieser Schaltposition hat der Hydromotor 7 ein geringes Schluckvermögen und die höhere Drehzahl. Der Steueranschluß 10 steht unter Druck. In der anderen Stellung des Steuerventils 11 ist der Steueranschluß 10 mit der Rückleitung 13 verbunden. Dabei ist das Schluckvermögen groß und die Drehzahl klein. Insoweit ist die Schaltanordnung bekannt, sofern das Steuerventil 11, gegebenenfalls über Vorsteuerventile, von Hand betätigt wird.

Gemäß Fig. 3 ist das Steuerventil 11 jedcch elektromagnetisch betätigbar und es ist ein Druckschalter 14 vorgesehen, dessen Kontakt normalerweise geöffnet ist und der bei einem Ansprechdruck von beispielsweise 80 bar schließt. Dieser Druckschalter 14 ist über eine Druckmittelleitung 15 an die Zuleitung 12 angeschlossen. Andererseits besteht eine elektrische Leitungsverbindung 16 mit dem Steuerventil 11.

Um den Hydromotor 7 in Bewegung zu setzen, wird Druck auf die Zuleitung 12 gegeben. Der Druckschalter 14 erfaßt den steigenden Zuleitungsdruck und sobald dieser den Ansprechdruck übersteigt, schließt der Druckschalter und das Steuerventil 11 nimmt die Stellung für großes Drehmoment und kleine Drehzahl ein. Der Druck in der Zuleitung steigt beispielsweise bis auf 175 bar an (Systemdruck bei landwirtschaftlichen Schleppern). Läßt im weiteren Entladevorgang das Belastungsmoment auf den Hydromotor 7 nach, so fällt der Zuleitungsdruck ab. Wird der Ansprechdruck wieder erreicht, so öffnet der Druckschalter 14 und das Steuerventil 11 schaltet in die gezeichnete Stellung für kleines Drehmoment und hohe Drehzahl um.

Um ein abermaliges Schließen des Druckschalters 14 bzw. ein Flattern des Steuerventils 11 zu vermeiden, kann der Druckschalter mit einer an sich bekannten elektrischen Selbsthalteeinrichtung versehen sein, welche dafür sorgt, daß die hohe Drehzahl bis zur Stillsetzung des Hydromotors beibehalten wird.
- 1: Kratzboden
- 2: Ladewagen
- 3: Umlenkwelle
- 4: Umlenkwelle
- 5: Heckklappe
- 6: Teil der Ladung
- 7: Hydromotor
- 8: Anschluß
- 9: Anschluß
- 10: Steueranschluß
- 11: Steuerventil
- 12: Zuleitung
- 13: Rückleitung
- 14: Druckschalter
- 15: Druckmittelleitung
- 16: elektrische Verbindung

## Patentansprüche

1. Ladewagen mit einem Hydromotor und einem Kratzboden, der von dem Hydromotor mit wahlweise zwei unterschiedlichen Drehzahlen antreibbar ist, wobei ein Steuerventil mit zwei Stellungen vorgesehen ist, das die Schluckmenge des Hydromotors und damit dessen Drehzahl bestimmt, dadurch gekennzeichnet, daß das Steuerventil (11) in Abhängigkeit von dem auf den Hydromotor (7) wirkenden Belastungsmoment selbsttätig auf die höhere Drehzahlstufe umschaltet, wenn im Verlauf der Entladung des Ladewagens das Belastungsmoment erstmalig unter einen bestimmten Grenzwert sinkt.

2. Ladewagen nach Anspruch 1, dadurch gekennzeichnet, daß ein auf den Druck in der Zuleitung (12) oder Rückleitung (13) des Hydromotors ansprechender elektrischer Druckschalter (14) vorgesehen ist, der beim Absinken des Drucks auf einen bestimmten Ansprechwert eine elektromagnetische Betätigung des Steuerventils (11) bewirkt, derart, daß die Drehzahl des Hydromotors (7) auf die höhere Drehzahlstufe ansteigt.

3. Ladewagen nach Anspruch 1, dadurch gekennzeichnet, daß der elektrische Druckschalter (14) mit Selbsthaltung ausgestattet ist, so daß der Hydromotor (7) auf der höheren Drehzahlstufe verharrt, bis er abgeschaltet wird.

## Claims

1. A forage loading wagon having a hydraulic motor and a scraper floor which is drivable by the hydraulic motor at selectively two different rotary speeds, wherein there is provided a control valve having two positions, which determines the intake quantity of the hydraulic motor and thus the rotary speed thereof, characterised in that in dependence on the load moment acting on the hydraulic motor (7) the control valve (11) automatically switches over to the higher rotary speed stage if in, the course of unloading of the wagon the load moment falls for the first time below a given limit value.

2. A wagon according to claim 1 characterised in that there is provided an electrical pressure switch (14) which is responsive to the pressure in the feed line (12) or the return line (13) of the hydraulic motor and which, when the pressure falls to a given response value, causes electromagnetic actuation of the control valve (11) in such a way that the rotary speed of the hydraulic motor (7) rises to the higher rotary speed stage.

3. A wagon according to claim 1 characterised in that the electrical pressure switch (14) is provided with self-holding means so that the hydraulic motor (7) remains at the higher rotary speed stage until it is switched off.

## Revendications

1. Remorque autochargeuse pourvue d'un moteur hydraulique et d'un fond mouvant qui est peut être entraîné par un moteur hydraulique, de manière sélective, avec deux vitesses de rotation, une vanne de commande à deux positions qui détermine le débit d'alimentation du moteur hydraulique et par suite, sa vitesse de rotation, étant prévue, caractérisée en ce que la vanne de commande (11), en fonction du moment résistant agissant sur le moteur hydraulique (7), commute automatiquement vers le palier de vitesse de rotation supérieur, lorsqu'au cours du déchargement de la remorque autochargeuse, le moment résistant chute pour la première fois au-dessous d'une valeur seuil déterminée.

2. Remorque autochargeuse selon la revendication 1, caractérisée en ce qu'il est prévu un contacteur manométrique (14) électrique qui réagit à la pression dans la conduite d'alimentation (12) ou dans la conduite de retour (13) du moteur hydraulique et qui, lorsque la pression chute à une valeur déterminée, provoque un actionnement électromagnétique de la vanne de commande (11) de telle sorte que la vitesse de rotation du moteur hydraulique (7) passe au palier de vitesse supérieur.

3. Remorque autochargeuse selon la revendication 1, caractérisée en ce que le contacteur manométrique (14) électrique est pourvu d'un système d'automaintien, de telle sorte que le moteur hydraulique (7) reste sur le palier de vitesse supérieur jusqu'à sa coupure.
